(19) Europäisches Patentamt
European Patent Office
Office européen des brevets

(11) **EP 1 899 182 B1**

(12) **FASCICULE DE BREVET EUROPEEN**

(45) Date de publication et mention
de la délivrance du brevet:
**12.08.2009 Bulletin 2009/33**

(21) Numéro de dépôt: **06763953.4**

(22) Date de dépôt: **28.06.2006**

(51) Int Cl.:
***B60C 9/22*** *(2006.01)*        ***B60C 9/20*** *(2006.01)*

(86) Numéro de dépôt international:
**PCT/EP2006/063657**

(87) Numéro de publication internationale:
**WO 2007/003561 (11.01.2007 Gazette 2007/02)**

(54) **PNEUMATIQUE POUR VEHICULES LOURDS**

**REIFEN FÜR SCHWERFAHRZEUGE**

**TYRE FOR HEAVY VEHICLES**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.06.2005 FR 0506758**

(43) Date de publication de la demande:
**19.03.2008 Bulletin 2008/12**

(73) Titulaires:
  • **Société de Technologie Michelin
    63000 Clermont-Ferrand (FR)**
  • **Michelin Recherche et Technique S.A.
    1763 Granges-Paccot (CH)**

(72) Inventeur: **COUE, Jean
    F-63540 Romagnat (FR)**

(74) Mandataire: **Le Cam, Stéphane Georges Elie
    Manufacture Francaise des Pneumatiques
    Michelin
    23, place des Carmes-Déchaux
    SGD/LG/PI - F35- Ladoux
    63040 Clermont-Ferrand Cedex 9 (FR)**

(56) Documents cités:
    **WO-A-20/04076204        FR-A- 2 501 126**

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers, du type décrit par WO 2004/076204.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappe», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringle», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

L'armature de sommet comprend au moins une couche de travail ; lorsque ladite armature de sommet comporte au moins deux couches de travail, celles-ci sont formées d'éléments de renforcement métalliques inextensibles, parallèles entre eux dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet s'en trouve pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés des pneumatiques ainsi construits ont fait apparaître des ruptures de fatigue des câbles de la nappe additionnelle et plus particulièrement des bords de ladite nappe, que la nappe dite de triangulation soit présente ou non.

Pour remédier à de tels inconvénients et améliorer l'endurance de l'armature de sommet de ces pneumatiques, la demande française WO 99/24269 propose, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Un but de l'invention est de fournir des pneumatiques pour véhicules « Poids-Lourds » dont les performances d'endurance sont encore améliorées par rapport aux pneumatiques usuels.

Ce but est atteint selon l'invention par un pneumatique à armature de carcasse radiale comprenant une armature de sommet formée d'au moins deux couches de sommet de travail d'éléments de renforcement inextensibles, croisés d'une nappe à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, lesdites deux nappes ayant des largeurs axiales inégales, au moins un premier profilé P de mélange caoutchouteux séparant la nappe d'éléments de renforcement axialement la plus large d'au moins une extrémité d'une deuxième nappe axialement plus étroite que la nappe axialement la plus large, ledit profilé P étant radialement séparé au moins en partie du calandrage C de ladite nappe d'éléments de renforcement axialement plus étroite par un second profilé de mélange caoutchouteux G, et lesdits premier et second profilés de mélange caoutchouteux P et G et ledit calandrage C ayant respectivement des modules sécants d'élasticité sous tension à 10 % d'allongement MP, MG, MC de sorte que MC $\geq$ MG > MP, ledit pneumatique comprenant additionnellement dans chaque épaule au moins une couche d'éléments de renforcement, orientés circonférentiellement et présentant une ondulation, l'extrémité axialement intérieure de ladite couche étant radialement adjacente au bord d'une couche de sommet de travail.

Selon une réalisation préférée de l'invention, les éléments de renforcement de la couche additionnelle présentent une ondulation de longueur d'onde $\lambda$ comprise entre 10 et 50 mm.

De préférence encore, les éléments de renforcement de la couche additionnelle présentent une ondulation d'amplitude a comprise entre 2 et 10 mm.

Selon un mode préféré de réalisation de l'invention, l'extrémité axialement intérieure de ladite couche additionnelle est radialement adjacente au bord de la couche de sommet de travail axialement la moins large et de préférence radialement extérieure à ladite couche de travail axialement la moins large.

Des éléments de renforcement orientés circonférentiellement et présentant une ondulation sont des éléments de renforcement qui présentent une orientation principale faisant avec la direction circonférentielle des angles compris dans l'intervalle + 2,5°, - 2,5° autour de 0°, et qui ondulent autour de cette orientation principale.

Les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les largeurs axiales des couches d'éléments de renforcement ou positions axiales des extrémités desdites couches sont mesurées sur une coupe transversale d'un pneumatique, le pneumatique étant donc dans un état non gonflé.

Les essais réalisés avec des pneumatiques ainsi définis selon l'invention ont mis en évidence que les performances en terme d'endurance du pneumatique sont améliorées par rapport à des pneumatiques de conception plus traditionnelles ne comportant pas une combinaison conforme à l'invention de profilés de mélange caoutchouteux et de couches additionnelles. Une interprétation de ces résultats peut être de constater que la couche additionnelle, et plus exactement les éléments de renforcement de la couche additionnelle, permet à la fois de diminuer l'apparition de fissures et de limiter la propagation d'éventuelles amorces de telles fissures à l'extrémité de la couche de travail à laquelle elle est adjacente. Une telle action peut éventuellement être d'une part liée à une reprise locale des efforts, initialement supportés par les couches de travail, par la couche additionnelle du fait de son orientation principale selon une direction circonférentielle et d'autre part la conséquence d'un renforcement des masses caoutchouteuses de calandrage entre les éléments de renforcement de ladite couche de travail par les éléments de renforcement de la couche additionnelle du fait de l'ondulation desdits éléments de renforcement de la couche additionnelle. Cet effet sur les efforts et sur les masses caoutchouteuses de calandrage est en outre renforcé par la présence des couches de mélanges caoutchouteux P et G.

La combinaison des couches de mélanges caoutchouteux P et G, de par le choix de leurs modules d'élasticité respectifs MP et MG autorise tout d'abord une amélioration de la résistance de l'architecture sommet à la séparation entre les extrémités des nappes de travail. La présence de ces couches de mélange caoutchouteux semble en effet permettre, du fait du découplage des nappes ainsi obtenu, de protéger notamment l'extrémité de la nappe la plus étroite et ainsi prévenir ou tout au moins retarder l'apparition d'une délamination de la dite extrémité de la nappe la plus étroite axialement. Ensuite, il semble que cet effet soit accentué par la combinaison avec la couche additionnelle.

De préférence, la somme des épaisseurs respectives des profilés de mélange caoutchouteux P et G, mesurée à l'extrémité de la nappe la moins large des deux nappes considérées, sera préférentiellement comprise entre 30 % et 80 % de l'épaisseur globale de mélange caoutchouteux entre génératrices de câbles respectivement des deux nappes : une épaisseur inférieure à 30 % ne permettant pas d'obtenir des résultats probants, et une épaisseur supérieure à 80 % étant inutile vis à vis de l'amélioration à la résistance à la séparation entre nappes et désavantageux du point de vue coût.

Une première variante de réalisation de l'invention prévoit que l'extrémité axialement extérieure de ladite couche additionnelle est située à une distance du plan équatorial du pneumatique inférieure ou égale à la distance séparant dudit plan l'extrémité de la couche de travail à laquelle elle est adjacente. Selon cette variante de réalisation de l'invention, l'extrémité axialement extérieure de la couche additionnelle est donc axialement intérieure à l'extrémité d'au moins la couche de travail adjacente à ladite couche additionnelle.

Une seconde variante de réalisation de l'invention prévoit que l'extrémité axialement extérieure de ladite couche additionnelle est axialement extérieure à l'extrémité de la couche de sommet de travail à laquelle elle est adjacente.

Selon l'une ou l'autre de ces variantes de réalisation de l'invention, un mode de réalisation avantageux de l'invention prévoit que la distance entre ladite couche et l'extrémité de la couche de sommet de travail axialement la plus large est supérieure à 1.5 mm et de préférence comprise entre 2 et 12 mm.

Les couches de mélange caoutchouteux P et G sont alors avantageusement disposées d'une part pour conduire à un découplage des couches de sommet de travail contribuant en soi à l'amélioration de l'endurance du pneumatique et d'autre part pour contribuer à assurer une distance minimale supérieure à 1.5 mm entre la couche additionnelle d'éléments de renforcement circonférentiels et l'extrémité de la couche de sommet de travail axialement la plus large. Selon ce mode de réalisation, les extrémités des éléments de renforcement de la couche de travail axialement la plus large ne sont pas sollicitées du fait de la trop grande proximité des éléments de renforcement circonférentiels. En d'autres termes, les éléments de renforcement circonférentiels de la couche additionnelle ne pénètrent avantageusement pas un cercle de rayon égal à 1.5 mm centré sur l'extrémité des éléments de renforcement de la couche de travail axialement la plus large.

Il faut entendre par nappes couplées des nappes dont les éléments de renforcement respectifs sont séparés radialement d'au plus 1.5 mm, ladite épaisseur de caoutchouc étant mesurée radialement entre les génératrices respectivement supérieure et inférieure desdits éléments de renforcement.

Selon un autre mode de réalisation, au moins une partie de la couche additionnelle est radialement et/ou axialement adjacente au bord de la couche de travail axialement la plus large. Conformément à ce mode de réalisation de l'invention, soit la couche additionnelle est uniquement adjacente à la couche de travail axialement la plus large, soit la couche additionnelle est adjacente à deux couches de travail et l'extrémité axialement extérieure du profilé caoutchouteux G et/ou P est située à une distance du plan équatorial du pneumatique inférieure à la distance séparant dudit plan l'extrémité de la nappe d'éléments de renforcement axialement la plus large.

Une réalisation préférée de l'invention prévoit que l'extrémité axialement extérieure dudit premier profilé P est située à une distance du plan équatorial du pneumatique inférieure à la distance séparant dudit plan l'extrémité de la nappe d'éléments de renforcement axialement la plus large.

Une réalisation avantageuse de l'invention prévoit que l'extrémité axialement extérieure du second profilé de mélange caoutchouteux G est située à une distance dudit plan au moins égale à la demi-largeur de ladite nappe d'éléments de renforcement axialement plus étroite. Selon cette réalisation de l'invention, l'extrémité de ladite nappe axialement la plus étroite est radialement séparée de la nappe la plus large par la superposition radiale des deux profilés de mélange caoutchouteux P et G.

Selon une réalisation préférée de l'invention, le second profilé de mélange caoutchouteux G a son extrémité axialement intérieure située à une distance du plan équatorial au plus égale à la distance séparant dudit plan l'extrémité axialement intérieure dudit premier profilé de mélange caoutchouteux P. Selon cette réalisation et notamment lorsque l'extrémité axialement extérieure du second profilé de mélange caoutchouteux G est située à une distance dudit plan au moins égale à la demi-largeur de ladite nappe d'éléments de renforcement axialement plus étroite, le premier profilé de mélange caoutchouteux P n'est pas au contact de ladite nappe axialement la plus étroite.

Selon un mode de réalisation avantageux de l'invention, la couche de sommet de travail axialement la plus large est radialement à l'intérieur des autres couches de sommet de travail.

Selon ce mode de réalisation le premier profilé de mélange caoutchouteux G est alors au moins en partie radialement extérieur au second profilé de mélange caoutchouteux P.

De préférence encore, la largeur axiale D du profilé P et/ou G comprise entre l'extrémité axialement la plus à l'intérieure du profilé P et/ou G et l'extrémité de la nappe de sommet de travail axialement la moins large est telle que :

$$3.\phi_2 \leq D \leq 20.\phi_2$$

avec $\phi_2$, diamètre des éléments de renforcement de la nappe de sommet de travail axialement la moins large. Une telle relation définit une zone d'engagement entre le profilé P et/ou G de mélanges caoutchouteux et la nappe de travail axialement la moins large. Un tel engagement en dessous d'une valeur égale à trois fois le diamètre des éléments de renforcement de la nappe de travail radialement extérieure peut ne pas être suffisant pour obtenir un découplage des nappes de travail pour notamment obtenir une atténuation des sollicitations en extrémité de la nappe de travail axialement la moins large. Une valeur de cet engagement supérieure à vingt fois le diamètre des éléments de renforcement de la nappe de travail axialement la moins large peut conduire à une diminution trop importante de la rigidité de dérive de l'armature de sommet du pneumatique.

De préférence, la largeur axiale D du profilé P et/ou G comprise entre l'extrémité axialement la plus à l'intérieure du profilé P et/ou G et l'extrémité axialement extérieure de la couche de sommet de travail axialement la moins large est supérieure à 5 mm.

L'invention prévoit encore de préférence que l'épaisseur cumulée des profilés P et G, à l'extrémité axialement extérieure de la nappe de sommet de travail axialement la moins large, présente une épaisseur telle que la distance radiale d entre les deux nappes de sommet de travail, séparées par le profilé P et/ou G, vérifie la relation :

$$3/5.\phi_2 < d < 5.\phi_2$$

avec $\phi_2$, diamètre des éléments de renforcement de la nappe de sommet de travail axialement la moins large.

La distance d est mesurée de câble à câble, c'est-à-dire entre le câble d'une première nappe de travail et le câble d'une seconde nappe de travail. En d'autres termes, cette distance d englobe l'épaisseur du profilé P et/ou G et les épaisseurs respectives des mélanges caoutchouteux de calandrage, radialement extérieure aux câbles de la nappe de travail radialement intérieure et radialement intérieure aux câbles de la nappe de travail radialement extérieure.

Les différentes mesures d'épaisseur sont effectuées sur une coupe transversale d'un pneumatique, le pneumatique étant donc dans un état non gonflé.

De préférence encore, la différence entre la largeur axiale de la couche de sommet de travail axialement la plus large et la largeur axiale de la couche de sommet de travail axialement la moins large est comprise entre 5 et 30 mm.

Selon une variante de réalisation avantageuse de l'invention, l'angle formé avec la direction circonférentielle par les éléments de renforcement des couches de sommet de travail est inférieur à 30° et de préférence inférieur à 25°.

Selon une variante de réalisation de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large. La couche de protection formée d'éléments de renforcement élastiques peut, dans le dernier cas cité ci-dessus, être d'une part éventuellement découplée des bords de ladite couche de travail la moins large par des profilés, et avoir d'autre part une largeur axiale inférieure ou supérieure à la largeur axiale de la couche de sommet la plus large.

Lorsque la couche de protection est axialement plus étroite que la couche de sommet de travail axialement la moins large, que ladite couche de sommet de travail est la couche de travail radialement la plus à l'extérieur, l'invention prévoit avantageusement qu'au moins le bord de la couche de protection est radialement adjacent et de préférence radialement extérieur à au moins le bord axialement intérieur de la couche additionnelle.

En comparaison des variantes précédentes de l'invention, pour obtenir une telle réalisation de l'invention, selon laquelle le bord de la couche de protection est radialement adjacente et extérieure à la couche additionnelle, soit l'extrémité de la couche de protection est axialement plus à l'extérieur, soit l'extrémité axialement intérieure de la couche additionnelle est axialement plus à l'intérieur. En d'autres termes, soit la couche de protection est axialement plus large, soit la couche additionnelle est axialement plus large en étant allongée axialement vers l'intérieur.

Selon l'un quelconque des modes de réalisation de l'invention évoqué précédemment, l'armature de sommet peut encore être complétée, par exemple radialement entre l'armature de carcasse et la couche de travail radialement la plus à l'intérieur, par une couche de triangulation constituée d'éléments de renforcement inextensibles faisant, avec la direction circonférentielle, un angle supérieur à 40° et de préférence de même sens que celui de l'angle formé par les éléments de renforcement de la couche radialement la plus proche de l'armature de carcasse.

Selon une première variante de réalisation de l'invention, les éléments de renforcement de la couche additionnelle sont des éléments de renforcement métalliques.

Selon une autre variante de réalisation de l'invention, les éléments de renforcement de la couche additionnelle sont des éléments de renforcement textiles.

Un mode de réalisation avantageux de l'invention prévoit que l'armature de sommet du pneumatique comporte en outre au moins une couche continue d'éléments de renforcement circonférentiels dont la largeur axiale est de préférence inférieure à la largeur axiale de la couche de sommet de travail axialement la plus large.

Les largeurs axiales des couches continues d'éléments de renforcement sont mesurées sur une coupe transversale d'un pneumatique, le pneumatique étant dans un état non gonflé.

La présence dans le pneumatique selon l'invention d'au moins une couche continue d'éléments de renforcement circonférentiels peut permettre de contribuer à l'obtention de rayons de courbures axiales quasi-infinis des différentes couches de renforcement dans une zone centrée sur le plan médian circonférentiel, ce qui contribue aux performances d'endurance du pneumatique.

Selon un mode de réalisation avantageux de l'invention, les éléments de renforcement d'au moins une couche continue d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 GPa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche continue d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la couche continue d'éléments de renforcement circonférentiels sont habituellement dénommés éléments "bi-module".

Selon une réalisation préférée de l'invention, la pente sensiblement constante et forte apparaît à partir d'un allongement relatif compris entre 0, 1 % et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche continue d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche continue d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels d'une couche continue peuvent être formés d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche continue d'éléments de renforcement circonférentiels est inférieur au module d'élasticité à la traction, mesuré dans les mêmes conditions, de la couche de sommet de travail la plus extensible. Un tel mode de réalisation permet de conférer, de manière simple, à la couche continue d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche continue d'éléments de renforcement circonférentiels étant mesuré sur une couche vulcanisée d'éléments coupés, prélevée sur le pneumatique.

Selon un troisième mode de réalisation de l'invention, les éléments de renforcement circonférentiels d'une couche continue sont des éléments métalliques ondulés, le rapport a/λ de l'amplitude d'ondulation sur la longueur d'onde étant au plus égale à 0,09. De préférence, le module d'élasticité à la traction par unité de largeur de la couche continue d'éléments de renforcement circonférentiels est inférieur au module d'élasticité à la traction, mesuré dans les mêmes conditions, de la couche de sommet de travail la plus extensible

Les éléments métalliques sont préférentiellement des câbles d'acier.

Selon une variante de réalisation de l'invention, au moins une couche continue d'éléments de renforcement circonférentiels est disposée radialement entre deux couches de sommet de travail.

Selon cette dernière variante de réalisation, la couche continue d'éléments de renforcement circonférentiels permet de limiter de manière plus importante les mises en compression des éléments de renforcement de l'armature de carcasse qu'une couche semblable mise en place radialement à l'extérieur des autres couches de sommet de travail. Elle est préférablement radialement séparée de l'armature de carcasse par au moins une couche de travail de façon à limiter les sollicitations desdits éléments de renforcement et ne pas trop les fatiguer.

Avantageusement encore dans le cas d'une couche continue d'éléments de renforcement circonférentiels disposée radialement entre deux couches de sommet de travail, les largeurs axiales des couches de sommet de travail radialement adjacentes à la couche d'éléments de renforcement circonférentiels sont supérieures à la largeur axiale de ladite couche d'éléments de renforcement circonférentiels.

D'autres détails et caractéristiques avantageux de l'invention ressortiront ci-après de la description des exemples de réalisation de l'invention en référence aux figures 1 à 6 qui représentent :

- figure 1, une vue méridienne d'un schéma d'un pneumatique selon un mode de réalisation de l'invention,

- figure 2, une vue méridienne d'un schéma d'un pneumatique selon un deuxième mode de réalisation de l'invention,

- figure 3, une vue méridienne d'un schéma d'un pneumatique selon un troisième mode de réalisation de l'invention,

- figure 4, une vue méridienne d'un schéma d'un pneumatique selon un quatrième mode de réalisation de l'invention,

- figure 5, une vue méridienne d'un schéma d'un pneumatique selon un cinquième mode de réalisation de l'invention,

- figure 6, une vue méridienne d'un schéma d'un pneumatique selon un sixième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

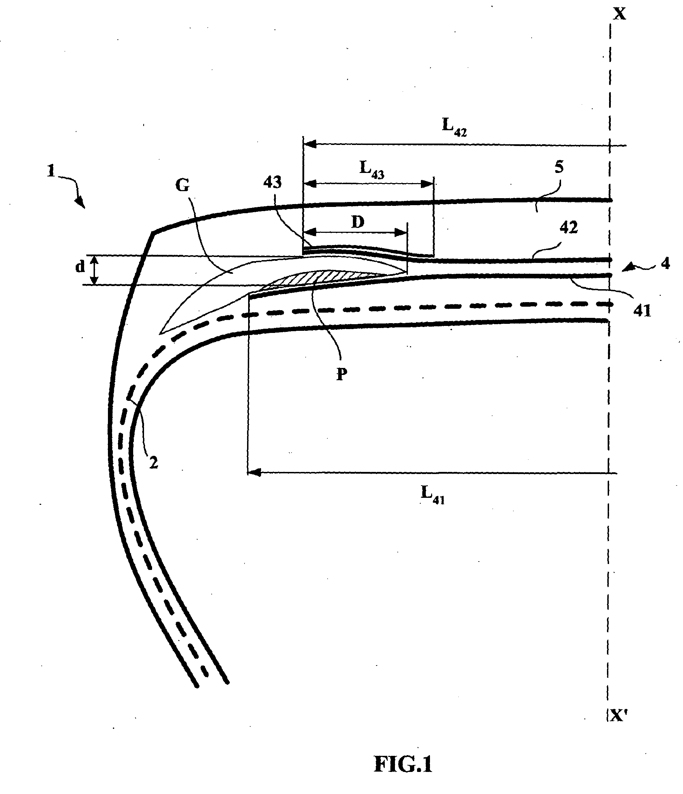

Sur la figure 1, le pneumatique 1, de dimension 315/80 R 22.5 X, a un rapport de forme H/S égal à 0,80, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques inextensibles 11.35 non frettés, continus sur toute la largeur de la nappe, orientés d'un angle égal à 18°,

- d'une seconde couche de travail 42 formée de câbles métalliques inextensibles 11.35 non frettés, continus sur toute la largeur de la nappe, orientés d'un angle égal à 18° et croisés avec les câbles métalliques de la couche 41 ; la couche 42 est axialement plus petite que la couche 41,

- d'une couche additionnelle 43 formée de câbles orientés circonférentiellement et présentant une ondulation de longueur d'onde λ égale à 40 mm et d'amplitude de crête à crête a égale à 8 mm ; la couche 43 est radialement extérieure et adjacente à la couche de travail radialement extérieure 42 et s'étend axialement vers l'extérieur jusqu'à l'extrémité axialement extérieure de la couche 42. Des essais ont été réalisés d'une part avec des câbles métalliques 4.23 et d'autre part avec des câbles textile PET 144x2.

La largeur axiale $L_{41}$ de la première couche de travail 41 est égale à 226 mm.

La largeur axiale $L_{42}$ de la deuxième couche de travail 42 est égale à 206 mm

La couche additionnelle 43 présente une largeur égale à 53 mm.

L'armature de sommet est elle-même coiffée d'une bande de roulement 5.

Une couche caoutchouteuse P est radialement à l'extérieur et au contact de la nappe de sommet de travail 41. Une couche G de mélange caoutchouteux radialement à l'extérieur et au contact de la couche P de mélanges caoutchouteux vient au contact de la couche 42. Dans le cas de la figure 1, le profilé G recouvre l'extrémité de ladite couche de travail 41 et s'étend au-delà de l'extrémité axialement extérieure de ladite couche 41, alors qu'avantageusement l'extrémité axialement extérieure du profilé P ne va pas au-delà de l'extrémité axialement extérieure de la couche 41. L'ensemble des profilés P et G forme une couche caoutchouteuse dite gomme de découplage. La combinaison des couches de mélange caoutchouteux P et G assure notamment un découplage entre la couche de travail 41 et l'extrémité de la couche de travail 42 radialement extérieure. La zone d'engagement des profilés de mélange caoutchouteux P et G entre les deux nappes de travail 41 et 42 est définie par l'épaisseur ou plus précisément la distance radiale d entre l'extrémité de la nappe 42 et la nappe 41 et par la largeur axiale D du profilé de mélange caoutchouteux G comprise entre l'extrémité axialement intérieure dudit profilé de mélange caoutchouteux G et l'extrémité de la nappe de sommet de travail axialement la plus étroite 42. La distance radiale d est égale à 3.5 mm. La distance axiale D est égale à 20 mm, soit environ 13.3 fois le diamètre $\phi_2$ des éléments de renforcement de la nappe de travail 42, le diamètre $\phi_2$ étant égal à 1.5 mm.

Les deux nappes de travail 41 et 42 ont respectivement des calandrages, c'est-à-dire des couches de mélange caoutchouteux au contact des éléments de renforcement, constitués du même mélange caoutchouteux. La nature des calandrages peut être la même pour les différentes couches ou bien différente.

Les modules d'élasticité à 10% d'élongation des couches de mélange caoutchouteux P et G et de la couche de calandrage de la nappe de travail 42, respectivement MP et MG et MC, sont choisis tels qu'ils satisfassent la relation suivante : MP < MG ≤ MC. Une telle réalisation du pneumatique 1 autorise une diminution des sollicitations de la couche de calandrage de la couche de travail 42, en passant par la couche de mélange caoutchouteux G au contact de la nappe de travail 42 jusqu'à la couche de mélange caoutchouteux P au contact de la nappe de travail 41, ce qui permet d'améliorer la résistance de l'architecture sommet à la séparation entre les extrémités des nappes de travail 41 et 42.

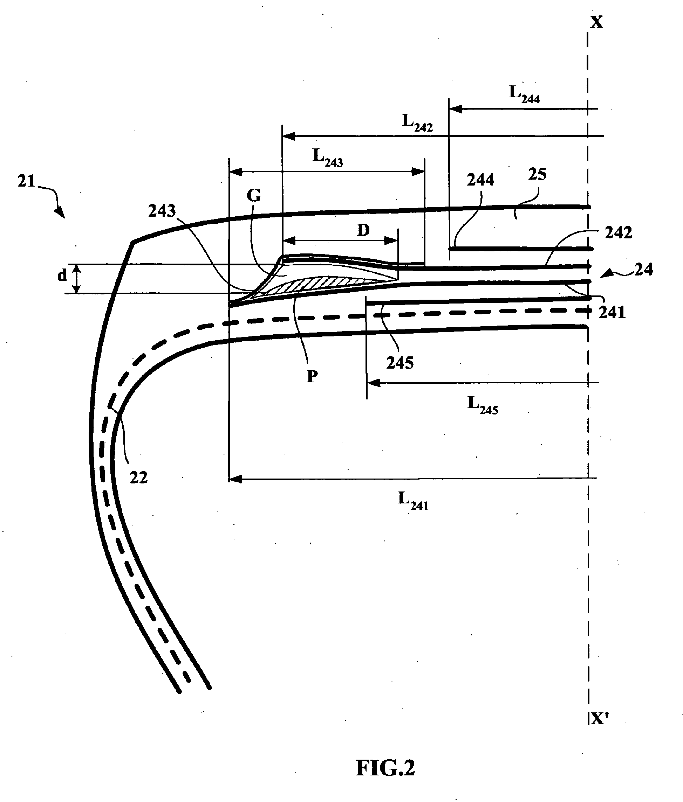

Sur la figure 2, le pneumatique 21 diffère de celui représenté sur la figure 1 d'une part, en ce qu'il comporte en outre :

- une couche de protection 244 formée de câbles métalliques élastiques 18x23 dont la largeur axiale est égale à 86 mm.

- une couche d'éléments de renforcement complémentaire 245, dite de triangulation, de largeur sensiblement égale à 200 mm formée de câbles métalliques inextensibles 9x28. Les éléments de renforcement de cette couche 245 forment un angle d'environ 45° avec la direction circonférentielle et sont orientés dans le même sens que les éléments de renforcement de la couche de travail 241. Cette couche 245 permet notamment de contribuer à la reprise des efforts de compression transversale dont est l'objet l'ensemble des éléments de renforcement dans la zone du sommet du pneumatique.

D'autre part, le pneumatique 21 diffère encore de celui représenté sur la figure 1, en ce qu'il présente une couche additionnelle 243 qui s'étend au-delà de l'extrémité axialement extérieure de la couche 242 et qui vient au contact de la couche 241 pour s'étendre jusqu'à l'extrémité axialement extérieure de ladite couche 241. De ce fait, l'extrémité axialement extérieur du profilé G est définie comme étant limitée axialement par l'extrémité de la couche 241. La couche additionnelle 243 présente une largeur égale à 65 mm.

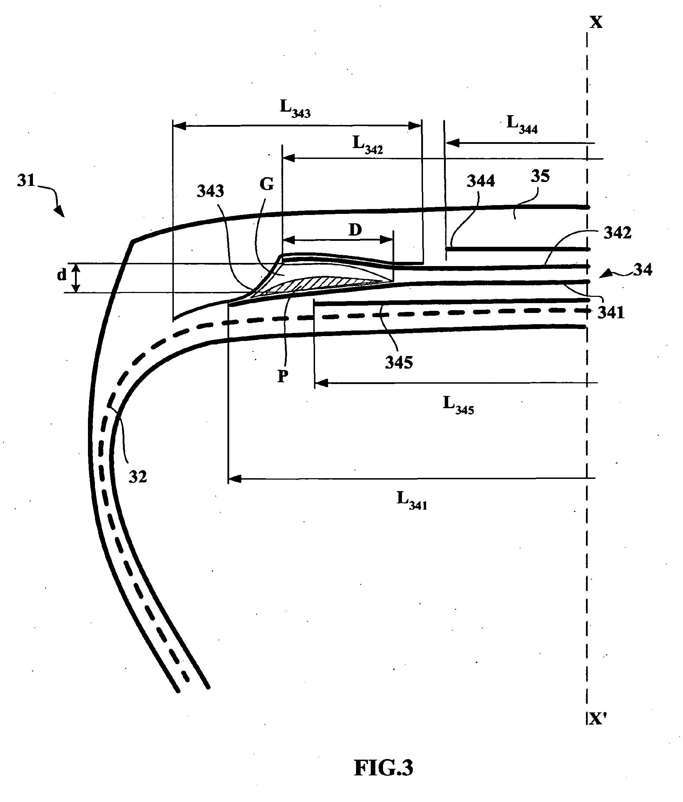

Sur la figure 3, le pneumatique 31 diffère de celui représenté sur la figure 2 en ce que la couche additionnelle 343 s'étend axialement au-delà de l'extrémité de la couche de travail 341. La couche additionnelle 343 présente une largeur égale à 75 mm.

Une autre variante de réalisation de l'invention, non représentée sur les figures, concerne le cas d'une couche additionnelle qui s'étend axialement au-delà de l'extrémité axialement extérieure de la couche de travail radialement extérieure et qui reste à une distance supérieure à 1.5 mm de l'extrémité de la couche de travail radialement intérieure. Selon une telle variante de réalisation, l'extrémité de la couche additionnelle peut se situer axialement entre les extrémités des deux couches de travail ou bien se situer au-delà de l'extrémité de la couche de travail axialement la plus large.

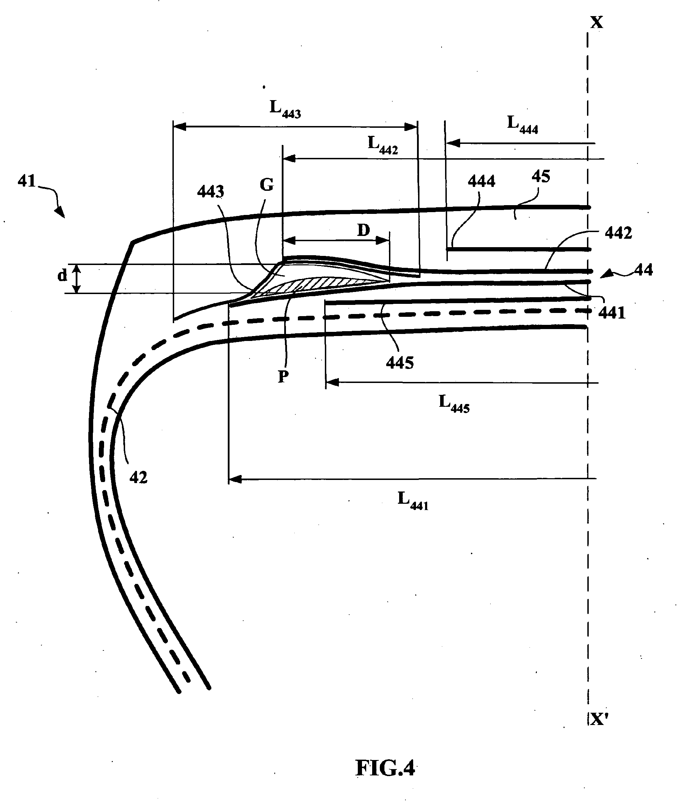

Sur la figure 4, le pneumatique 41 diffère de celui représenté sur la figure 3 en ce qu'il comporte une couche additionnelle 443 qui s'insère entre les deux couches de travail 441 et 442. La couche 443 est en effet radialement adjacente et intérieure à la couche 442 ; selon ce mode de réalisation de l'invention, la couche additionnelle 443 est également radialement adjacente à la couche 441. Selon d'autres réalisations conformes à l'invention mais non représentées sur les figures, la couche additionnelle 443 peut être au seul contact de la couche de sommet de travail 442 ou peut encore être est au seul contact de la couche de sommet de travail 441 soit en étant radialement adjacente et extérieure à celle-ci soit radialement adjacente et intérieure à celle-ci.

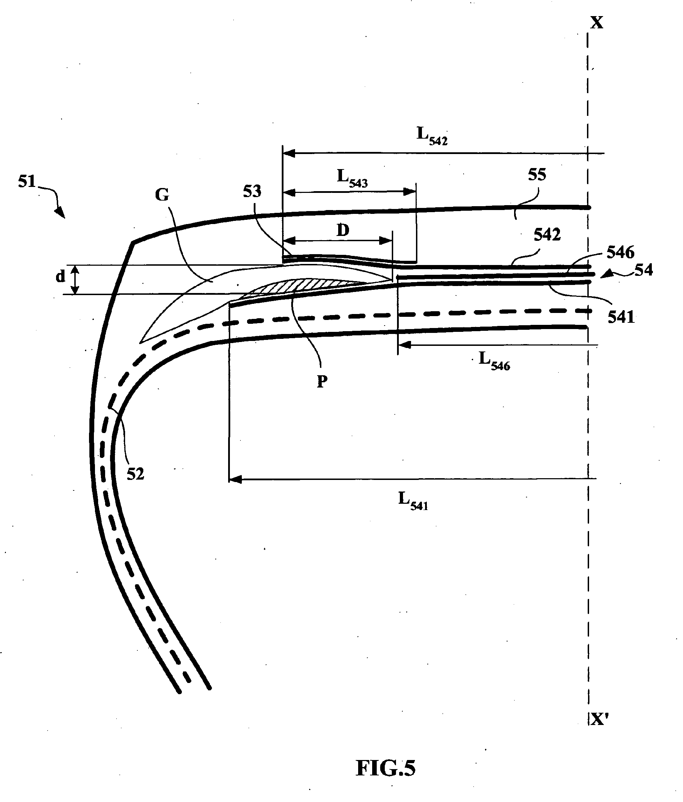

La figure 5 illustre une variante de réalisation d'un pneumatique 51 conformément à l'invention qui comparée à la réalisation de la figure 1 comporte en outre une couche continue 546 d'éléments de renforcement circonférentiels intercalée entre les couches de travail 541 et 542. Cette couche continue 546 présente une largeur $L_{546}$ égale à 185 mm, inférieure aux largeurs des couches de travail 541 et 542.

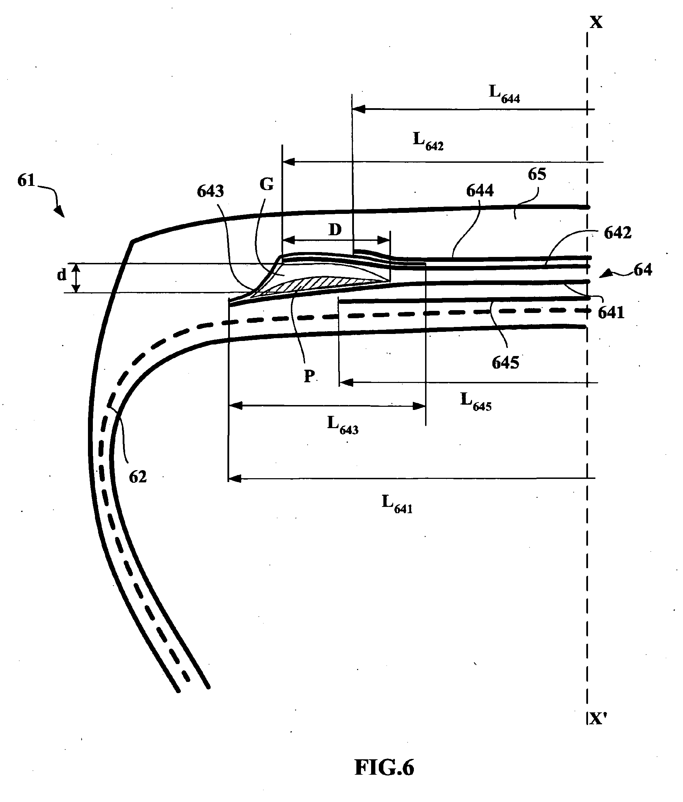

La figure 6 illustre encore une autre variante de réalisation d'un pneumatique 61 selon l'invention qui comparée à la réalisation de la figure 2 présente une couche de protection 644 radialement adjacente et extérieure à la couche additionnelle 643. Selon ce mode de réalisation l'extrémité axialement intérieure de la couche additionnelle 643 est ainsi radialement entre la couche de travail 642 et la couche de protection 644 sur une largeur axiale égale à 10 mm.

Sur la figure 6, la couche de protection a été élargie par rapport à celles des autres figures comportant une telle couche de protection ; un résultat similaire et non représenté sur les figures peut être obtenu avec une couche additionnelle plus large et dont l'extrémité axialement intérieure est plus à l'intérieur pour obtenir un chevauchement avec une couche de protection axialement plus étroite que celle de la figure 6.

Des essais ont été réalisés avec le pneumatique réalisé selon l'invention conformément à la représentation de la figure 2 et comparés avec un pneumatique de référence identique mais réalisé selon une configuration usuelle. Les essais ont été réalisés d'une part avec des éléments de renforcement de la couche additionnelle métalliques de type 4.23 et d'autre part avec des éléments de renforcement textiles de type PET 144x2.

Le pneumatique usuel ne comporte pas les couches additionnelles 43. Ils comportent par contre des couches de protection et de triangulation.

Les premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Le véhicule de référence comportant les pneumatiques usuels est associé à une charge par pneumatique de 3600 Kg en début de roulage et évolue pour atteindre une charge de 4350 Kg en fin de roulage.

Le véhicule comportant les pneumatiques selon l'invention est associé à une charge par pneumatique de 3800 Kg en début de roulage et évolue pour atteindre une charge de 4800 Kg en fin de roulage.

Les essais sont stoppés lorsque le pneumatique est endommagé et/ou ne fonctionne plus de façon normale.

Les essais ainsi réalisés ont montré que les véhicules équipés de pneumatiques selon l'invention avec les éléments de renforcement métalliques ou avec les éléments de renforcement textiles ont parcouru des distances supérieures ou égales à la distance parcourue par les véhicules de référence.

D'autres essais d'endurance ont été réalisés sur une machine de tests en alternant des séquences de virage à gauche, à droite puis de roulage en ligne droite dans des conditions de charge variant de 60 à 200 % de la charge nominale et de poussée variant de 0 à 0.35 fois la charge appliquée. La vitesse est comprise entre 30 et 70 km/h. Les essais sont stoppés lorsque le pneumatique est endommagé et/ou ne fonctionne plus de façon normale.

Les résultats obtenus montrent des gains en distances parcourues par les pneumatiques selon l'invention avec les éléments de renforcement métalliques et avec les éléments de renforcement textiles, celles-ci étant supérieures à la distance parcourue par les pneumatiques de référence.

**Revendications**

1.  Pneumatique (1-61) à armature de carcasse radiale (2-62) comprenant une armature de sommet (4-64) formée d'au moins deux couches de sommet de travail (41-641, 42-642) d'éléments de renforcement inextensibles, croisés d'une nappe à l'autre en faisant avec la direction circonférentielle des angles compris entre 10° et 45°, elle-même coiffée radialement d'une bande de roulement (5-65), ladite bande de roulement étant réunie à deux bourrelets par l'intermédiaire de deux flancs, au moins deux couches de travail ayant des largeurs axiales différentes, au moins un premier profilé P de mélange caoutchouteux séparant une couche de travail d'au moins une extrémité d'une deuxième couche axialement plus étroite, ledit profilé P étant radialement séparé au moins en partie du calandrage C de ladite couche de travail axialement plus étroite par un second profilé de mélange caoutchouteux G, lesdits premier et second profilés de mélange caoutchouteux P et G et ledit calandrage C ayant respectivement des modules sécants d'élasticité sous tension à 10 % d'allongement MP, MG, MC de sorte que $MC \geq MG > MP$, **caractérisé en ce que** ledit pneumatique comprend additionnellement dans chaque épaule au moins une couche d'éléments de renforcement, orientés circonférentiellement et présentant une ondulation, et **en ce que** l'extrémité axialement intérieure de ladite couche additionnelle est radialement adjacente au bord d'au moins une couche de sommet de travail.

2.  Pneumatique selon la revendication 1, **caractérisé en ce que** les éléments de renforcement de la couche additionnelle présentent une ondulation de longueur d'onde $\lambda$ comprise entre 10 et 50 mm.

3.  Pneumatique selon la revendication 1 ou 2, **caractérisé en ce que** les éléments de renforcement de la couche additionnelle présentent une ondulation d'amplitude a comprise entre 2 et 10 mm.

4.  Pneumatique selon l'une des revendications 1 à 3, **caractérisé en ce que** l'extrémité axialement intérieure de ladite couche additionnelle est radialement adjacente et, de préférence extérieure, au bord de la couche de sommet de travail axialement la moins large.

5.  Pneumatique selon l'une des revendications 1 à 4, **caractérisé en ce que** l'extrémité axialement extérieure de ladite couche additionnelle est située à une distance du plan équatorial du pneumatique inférieure ou égale à la distance séparant dudit plan l'extrémité de la couche de travail à laquelle elle est adjacente.

6.  Pneumatique selon l'une des revendications 1 à 4, **caractérisé en ce que** l'extrémité axialement extérieure de ladite couche additionnelle est axialement extérieure à l'extrémité de la couche de sommet de travail à laquelle elle est adjacente.

7.  Pneumatique selon l'une des revendications 1 à 6, **caractérisé en ce que** la distance entre ladite couche additionnelle et l'extrémité de la couche de sommet de travail axialement la plus large est supérieure à 1.5 mm.

8.  Pneumatique selon l'une des revendications 1 à 6, **caractérisé en ce qu'**au moins une partie de ladite couche additionnelle est radialement et/ou axialement adjacente au bord de la couche de travail axialement la plus large.

9.  Pneumatique selon l'une des revendications 1 à 8, **caractérisé en ce que** l'extrémité axialement extérieure dudit premier profilé P est située à une distance du plan équatorial du pneumatique inférieure à la distance séparant dudit plan l'extrémité de la couche de travail axialement la plus large.

10. Pneumatique selon l'une des revendications 1 à 9, **caractérisé en ce que** l'extrémité axialement extérieure du second profilé de mélange caoutchouteux G est située à une distance dudit plan au moins égale à la demi-largeur de la nappe d'éléments de renforcement axialement plus étroite.

11. Pneumatique selon l'une des revendications précédentes, **caractérisée en ce que** le second profilé de mélange caoutchouteux G a son extrémité axialement intérieure située à une distance du plan équatorial au plus égale à la distance séparant dudit plan l'extrémité axialement intérieure dudit premier profilé de mélange caoutchouteux P.

12. Pneumatique selon l'une des revendications précédentes, **caractérisé en ce que** la couche de sommet de travail axialement la plus large est radialement à l'intérieur des autres couches de sommet de travail.

**13.** Pneumatique selon l'une des revendications précédentes, **caractérisé en ce que** la largeur axiale D du profilé P et/ou G comprise entre l'extrémité axialement la plus à l'intérieur du profilé P et/ou G et l'extrémité de la nappe de sommet de travail axialement la moins large est telle que :

$$3.\phi_2 \le D \le 20.\phi_2$$

avec $\phi_2$, diamètre des éléments de renforcement de la nappe de sommet de travail radialement extérieure.

**14.** Pneumatique selon l'une des revendications précédentes, **caractérisé en ce que** la largeur axiale D du profilé P et/ou G comprise entre l'extrémité axialement la plus à l'intérieur du profilé P et/ou G et l'extrémité axialement extérieure de la couche de sommet de travail axialement la moins large est supérieure à 5 mm.

**15.** Pneumatique selon l'une des revendications précédentes, **caractérisé en ce que** l'épaisseur cumulée des profilés P et G, à l'extrémité axialement extérieure de la nappe de sommet de travail axialement la moins large, est telle que la distance d radiale entre les deux nappes de sommet de travail, séparées par le profilé P et/ou G, vérifie la relation :

$$3/5.\phi_2 < d < 5.\phi_2$$

avec $\phi_2$, diamètre des éléments de renforcement de la nappe de sommet de travail radialement extérieure.

**16.** Pneumatique selon l'une des revendications précédentes, **caractérisé en ce que** la différence entre la largeur axiale de la couche de sommet de travail axialement la plus large et la largeur axiale de la couche de sommet de travail axialement la moins large est comprise entre 5 et 30 mm.

**17.** Pneumatique selon l'une des revendications précédentes, **caractérisé en ce que** l'angle formé avec la direction circonférentielle par les éléments de renforcement des couches de sommet de travail est inférieur à 30° et de préférence inférieur à 25°.

**18.** Pneumatique selon l'une des revendications précédentes, **caractérisé en ce que** les couches de sommet de travail comportent des éléments de renforcement, croisés d'une nappe à l'autre, faisant avec la direction circonférentielle des angles variables selon la direction axiale.

**19.** Pneumatique selon l'une des revendications précédentes, **caractérisé en ce que** l'armature de sommet est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

**20.** Pneumatique selon l'une des revendications précédentes, **caractérisé en ce que** l'armature de sommet comporte une couche de triangulation formée d'éléments de renforcement métalliques faisant avec la direction circonférentielle des angles supérieurs à 40°.

**21.** Pneumatique selon l'une des revendications précédentes, **caractérisé en ce que** les éléments de renforcement de la couche additionnelle sont des éléments de renforcement métalliques.

**22.** Pneumatique selon l'une des revendications 1 à 18, **caractérisé en ce que** les éléments de renforcement de la couche additionnelle sont des éléments de renforcement textiles.

**23.** Pneumatique selon l'une des revendications précédentes, **caractérisé en ce que** l'armature de sommet comporte au moins une couche continue d'éléments de renforcement circonférentiels.

**24.** Pneumatique selon la revendication 23, **caractérisé en ce que** la largeur axiale d'au moins une couche continue d'éléments de renforcement circonférentiels est inférieure à la largeur axiale de la couche de sommet de travail axialement la plus large.

**25.** Pneumatique selon la revendication 23 ou 24, **caractérisé en ce qu'**au moins une couche continue d'éléments de renforcement circonférentiels est disposée radialement entre deux couches de sommet de travail.

**26.** Pneumatique selon la revendication 25, **caractérisé en ce que** les largeurs axiales des couches de sommet de travail radialement adjacentes à la couche continue d'éléments de renforcement circonférentiels sont supérieures à la largeur axiale de ladite couche continue d'éléments de renforcement circonférentiels.

**27.** Pneumatique selon l'une des revendications 23 à 26, **caractérisé en ce que** les éléments de renforcement d'au moins une couche continue d'éléments de renforcement circonférentiels sont des éléments de renforcement métalliques présentant un module sécant à 0,7 % d'allongement compris entre 10 et 120 GPa et un module tangent maximum inférieur à 150 GPa.

**28.** Pneumatique selon la revendication 27, **caractérisé en ce que** le module sécant des éléments de renforcement à 0,7 % d'allongement est inférieur à 100 GPa, de préférence supérieur à 20GPa et de préférence encore compris entre 30 et 90 GPa.

**29.** Pneumatique selon l'une des revendications 27 ou 28, **caractérisé en ce que** le module tangent maximum des éléments de renforcement est inférieur à 130 GPa et de préférence inférieur à 120 GPa.

**30.** Pneumatique selon l'une des revendications 23 à 29, **caractérisé en ce que** les éléments de renforcement d'au moins une couche continue d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

**31.** Pneumatique selon l'une des revendications 23 à 26, **caractérisé en ce que** les éléments de renforcement d'au moins une couche continue d'éléments de renforcement circonférentiels sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche continue d'éléments de renforcement circonférentiels étant de préférence inférieur au module d'élasticité à la traction, mesuré dans les mêmes conditions, de la couche de sommet de travail la plus extensible.

**32.** Pneumatique selon l'une des revendications 23 à 26, **caractérisé en ce que** les éléments de renforcement d'au moins une couche continue d'éléments de renforcement circonférentiels sont des éléments de renforcement métalliques ondulés, le rapport a/λ de l'amplitude d'ondulation a sur la longueur d'onde λ étant au plus égale à 0,09, le module d'élasticité à la traction par unité de largeur de la couche continue d'éléments de renforcement circonférentiels étant de préférence inférieur au module d'élasticité à la traction, mesuré dans les mêmes conditions, de la couche de sommet de travail la plus extensible.

**Claims**

**1.** A tire (1-61) having a radial carcass (2-62) reinforcement comprising a crown reinforcement (4-64) formed of at least two working crown layers (41-641, 42-642) of inextensible reinforcement elements, which are crossed from one ply to the other, forming angles of between 10° and 45° with the circumferential direction, which itself is topped radially by a tread (5-65), said tread being joined to two beads by means of two sidewalls, at least two working layers having different axial widths, at least one first profiled element P of rubber mix separating one working layer from at least one end of a second, axially narrower, layer, said profiled element P being radially separated at least in part from the liner C of said axially narrower working layer by a second profiled element of rubber mix G, said first and second profiled elements of rubber mix P and G and said liner C having secant moduli of elasticity under tension at 10% elongation MP, MG, MC respectively such that MC ≥ MG > MP, **characterized in that** said tire additionally comprises in each shoulder at least one layer of reinforcement elements which are oriented circumferentially and have an undulation, and **in that** the axially inner end of said additional layer is radially adjacent to the edge of at least one working crown layer.

**2.** A tire according to Claim 1, **characterized in that** the reinforcement elements of the additional layer exhibit an undulation of wavelength λ of between 10 and 50 mm.

3. A tire according to Claim 1 or 2, **characterized in that** the reinforcement elements of the additional layer exhibit an undulation of amplitude a of between 2 and 10 mm.

4. A tire according to one of Claims 1 to 3, **characterized in that** the axially inner end of said additional layer is radially adjacent and preferably external to the edge of the axially least wide working crown layer.

5. A tire according to one of Claims 1 to 4, **characterized in that** the axially outer end of said additional layer is located at a distance from the equatorial plane of the tire which is less than or equal to the distance between said plane and the end of the working layer to which it is adjacent.

6. A tire according to one of Claims 1 to 4, **characterized in that** the axially outer end of said additional layer is axially external to the end of the working crown layer to which it is adjacent.

7. A tire according to one of Claims 1 to 6, **characterized in that** the distance between said additional layer and the end of the axially widest working crown layer is greater than 1.5 mm.

8. A tire according to one of Claims 1 to 6, **characterized in that** at least part of said additional layer is radially and/or axially adjacent to the edge of the axially widest working layer.

9. A tire according to one of Claims 1 to 8, **characterized in that** the axially outer end of said first profiled element P is located at a distance from the equatorial plane of the tire which is less than the distance between said plane and the end of the axially widest working layer.

10. A tire according to one of Claims 1 to 9, **characterized in that** the axially outer end of the second profiled element of rubber mix G is located at a distance from said plane which is at least equal to half the width of the axially narrower ply of reinforcement elements.

11. A tire according to one of the preceding claims, **characterized in that** the second profiled element of rubber mix G has its axially inner end located at a distance from the equatorial plane at most equal to the distance between said plane and the axially inner end of said first profiled element of rubber mix P.

12. A tire according to one of the preceding claims, **characterized in that** the axially widest working crown layer is radially to the inside of the other working crown layers.

13. A tire according to one of the preceding claims, **characterized in that** the axial width D of the profiled element P and/or G between the axially innermost end of the profiled element P and/or G and the end of the axially least wide working crown ply is such that:

$$3.\phi_2 \leq D \leq 20.\phi_2$$

where $\phi_2$ is the diameter of the reinforcement elements of the radially outer working crown ply.

14. A tire according to one of the preceding claims, **characterized in that** the axial width D of the profiled element P and/or G between the axially innermost end of the profiled element P and/or G and the axially outer end of the axially least wide working crown layer is greater than 5 mm.

15. A tire according to one of the preceding claims, **characterized in that** the total thickness of the profiled elements P and G, at the axially outer end of the axially least wide working crown ply, is such that the radial distance d between the two working crown plies, separated by the profiled element P and/or G, satisfies the relationship:

$$3/5.\phi_2 < d < 5.\phi_2$$

where $\phi_2$ is the diameter of the reinforcement elements of the radially outer working crown ply.

16. A tire according to one of the preceding claims, **characterized in that** the difference between the axial width of the axially widest working crown layer and the axial width of the axially least wide working crown layer is between 5 and 30 mm.

17. A tire according to one of the preceding claims, **characterized in that** the angle formed with the circumferential direction by the reinforcement elements of the working crown layers is less than 30° and preferably less than 25°.

18. A tire according to one of the preceding claims, **characterized in that** the working crown layers comprise reinforcement elements, crossed from one ply to the other, forming angles which are variable in the axial direction with the circumferential direction.

19. A tire according to one of the preceding claims, **characterized in that** the crown reinforcement is finished off radially to the outside by at least one supplementary ply, referred to as a protective ply, of what are called elastic reinforcement elements, which are oriented relative to the circumferential direction at an angle of between 10° and 45° and of the same direction as the angle formed by the inextensible elements of the working ply which is radially adjacent thereto.

20. A tire according to one of the preceding claims, **characterized in that** the crown reinforcement comprises a triangulation layer formed of metallic reinforcement elements forming angles greater than 40° with the circumferential direction.

21. A tire according to one of the preceding claims, **characterized in that** the reinforcement elements of the additional layer are metallic reinforcement elements.

22. A tire according to one of Claims 1 to 18, **characterized in that** the reinforcement elements of the additional layer are textile reinforcement elements.

23. A tire according to one of the preceding claims, **characterized in that** the crown reinforcement comprises at least one continuous layer of circumferential reinforcement elements.

24. A tire according to Claim 23, **characterized in that** the axial width of at least one continuous layer of circumferential reinforcement elements is less than the axial width of the axially widest working crown layer.

25. A tire according to Claim 23 or 24, **characterized in that** at least one continuous layer of circumferential reinforcement elements is arranged radially between two working crown layers.

26. A tire according to Claim 25, **characterized in that** the axial widths of the working crown layers radially adjacent to the continuous layer of circumferential reinforcement elements are greater than the axial width of said continuous layer of circumferential reinforcement elements.

27. A tire according to one of Claims 23 to 26, **characterized in that** the reinforcement elements of at least one continuous layer of circumferential reinforcement elements are metallic reinforcement elements having a secant modulus at 0.7% elongation of between 10 and 120 GPa and a maximum tangent modulus of less than 150 GPa.

28. A tire according to Claim 27, **characterized in that** the secant modulus of the reinforcement elements at 0.7% elongation is less than 100 GPa, preferably greater than 20 GPa and more preferably still of between 30 and 90 GPa.

29. A tire according to one of Claims 27 or 28, **characterized in that** the maximum tangent modulus of the reinforcement elements is less than 130 GPa and preferably less than 120 GPa.

30. A tire according to one of Claims 23 to 29, **characterized in that** the reinforcement elements of at least one continuous layer of circumferential reinforcement elements are metallic reinforcement elements having a curve of tensile stress as a function of the relative elongation having shallow gradients for the low elongations and a substantially constant, steep gradient for the higher elongations.

31. A tire according to one of Claims 23 to 26, **characterized in that** the reinforcement elements of at least one continuous layer of circumferential reinforcement elements are metallic reinforcement elements cut so as to form sections of a length less than the circumference of the least long ply, but greater than 0.1 times said circumference, the cuts between sections being axially offset from each other, the modulus of elasticity in tension per unit of width of the continuous layer of circumferential reinforcement elements preferably being less than the modulus of elasticity in tension, measured under the same conditions, of the most extensible working crown layer.

**32.** A tire according to one of Claims 23 to 26, **characterized in that** the reinforcement elements of at least one continuous layer of circumferential reinforcement elements are undulating metallic reinforcement elements, the ratio a/λ of the amplitude of undulation a to the wavelength λ being at most equal to 0.09, the modulus of elasticity in tension per unit of width of the continuous layer of circumferential reinforcement elements preferably being less than the modulus of elasticity in tension, measured under the same conditions, of the most extensible working crown layer.


**Patentansprüche**

**1.** Reifen (1-61) mit radialer Karkassenbewehrung (2-62) mit einer Kronenbewehrung (4-64), die aus mindestens zwei Arbeitskronenschichten (41-641, 42-642) nicht dehnbarer Verstärkungselemente gebildet ist, die von einer Lage zur anderen gekreuzt sind, indem sie mit der Umfangsrichtung Winkel bilden, die zwischen 10° und 45° liegen, auf der radial eine Lauffläche (5-65) liegt, wobei die Lauffläche mit zwei Wülsten über zwei Flanken verbunden ist, wobei mindestens zwei Arbeitsschichten verschiedene axiale Breiten aufweisen, wobei mindestens ein erstes Profil P aus einem kautschukartigen Gemisch eine Arbeitsschicht von mindestens einem Ende einer axial schmaleren zweiten Schicht trennt, wobei das Profil P durch ein zweites Profil G aus einem kautschukartigen Gemisch zumindest teilweise radial von der Zwischenlage C der axial schmaleren Arbeitsschicht getrennt ist, wobei das erste und das zweite Profil P und G aus dem kautschukartigen Gemisch und die Zwischenlage C jeweils ein Sekantenelastizitätsmodul unter Zugbelastung von 10% Dehnung MP, MG, MC aufweisen, so dass MC ≥ MG > MP, **dadurch gekennzeichnet, dass** der Reifen zusätzlich in jeder Schulter mindestens eine Schicht von Verstärkungselementen aufweist, die um den Umfang ausgerichtet sind und eine Wellung aufweisen, und dass sich das axial innere Ende der zusätzlichen Schicht radial neben dem Rand mindestens einer Arbeitskronenschicht befindet.

**2.** Reifen nach Anspruch 1, **dadurch gekennzeichnet, dass** die Verstärkungselemente der zusätzlichen Schicht eine Wellung mit Wellenlänge λ zwischen 10 und 50 mm aufweisen.

**3.** Reifen nach Anspruch 1 oder 2, **dadurch gekennzeichnet, dass** die Verstärkungselemente der zusätzlichen Schicht eine Wellung mit einer Amplitude zwischen 2 und 10 mm aufweisen.

**4.** Reifen nach einem der Ansprüche 1 bis 3, **dadurch gekennzeichnet, dass** das axial innere Ende der zusätzlichen Schicht radial neben dem und vorzugsweise außerhalb des Rand(s) der Arbeitskronenschicht, die axial am wenigsten breit ist, liegt.

**5.** Reifen nach einem der Ansprüche 1 bis 4, **dadurch gekennzeichnet, dass** sich das axial äußere Ende der zusätzlichen Schicht in einem Abstand von der Äquatorialebene des Reifens befindet, der kleiner gleich dem Abstand ist, der das Ende der Arbeitsschicht, neben der sie liegt, von der Ebene trennt.

**6.** Reifen nach einem der Ansprüche 1 bis 4, **dadurch gekennzeichnet, dass** sich das axial äußere Ende der zusätzlichen Schicht axial außerhalb des Endes der Arbeitskronenschicht befindet, neben der sie liegt.

**7.** Reifen nach einem der Ansprüche 1 bis 6, **dadurch gekennzeichnet, dass** der Abstand zwischen der zusätzlichen Schicht und dem Ende der Arbeitskronenschicht, die axial am breitesten ist, über 1,5 mm beträgt.

**8.** Reifen nach einem der Ansprüche 1 bis 6, **dadurch gekennzeichnet, dass** sich mindestens ein Teil der zusätzlichen Schicht radial und/oder axial neben dem Rand der Arbeitsschicht, die axial am breitesten ist, befindet.

**9.** Reifen nach einem der Ansprüche 1 bis 8, **dadurch gekennzeichnet, dass** sich das axial äußere Ende des ersten Profils P in einem Abstand von der Äquatorialebene des Reifens befindet, der kleiner ist als der Abstand, der das Ende der Arbeitsschicht, die axial am breitesten ist, von der Ebene trennt.

**10.** Reifen nach einem der Ansprüche 1 bis 9, **dadurch gekennzeichnet, dass** sich das axial äußere Ende des zweiten Profils G aus einem kautschukartigen Gemisch in einem Abstand von der Ebene befindet, der mindestens gleich der halben Breite der Lage von Verstärkungselementen, die axial am schmalsten ist, ist.

**11.** Reifen nach einem der vorhergehenden Ansprüche, **dadurch gekennzeichnet, dass** sich das zweite Profil G aus einem kautschukartigen Gemisch an seinem axial inneren Ende in einem Abstand von der Äquatorialebene befindet, der höchstens gleich dem Abstand ist, der das axial innere Ende des ersten Profils P aus einem kautschukartigen Gemisch von der Ebene trennt.

**12.** Reifen nach einem der vorhergehenden Ansprüche, **dadurch gekennzeichnet, dass** die Arbeitskronenschicht, die axial am breitesten ist, radial innerhalb der anderen Arbeitskronenschichten liegt.

**13.** Reifen nach einem der vorhergehenden Ansprüche, **dadurch gekennzeichnet, dass** die axiale Breite D des Profils P und/oder G, die zwischen dem axial am weitesten innen liegenden Ende des Profils P und/oder G und dem Ende der Arbeitskronenlage, die axial am wenigsten breit ist, liegt, derart ist, dass:

$$3.\phi_2 \leq D \leq 20.\phi_2$$

wobei $\phi_2$ der Durchmesser der Verstärkungselemente der radial äußeren Arbeitskronenlage ist.

**14.** Reifen nach einem der vorhergehenden Ansprüche, **dadurch gekennzeichnet, dass** die axiale Breite D des Profils P und/oder G, die zwischen dem axial am weitesten innen liegenden Ende des Profils P und/oder G und dem axial äußeren Ende der Arbeitskronenschicht, die axial am wenigsten breit ist, liegt, größer als 5 mm ist.

**15.** Reifen nach einem der vorhergehenden Ansprüche, **dadurch gekennzeichnet, dass** die kombinierte Dicke der Profile P und G am axial äußeren Ende der Arbeitskronenlage, die axial am wenigsten breit ist, derart ist, dass der radiale Abstand d zwischen den zwei Arbeitskronenlagen, die durch das Profil P und/oder getrennt sind, die folgende Gleichung erfüllt:

$$3/5.\phi_2 < d < 5.\phi_2$$

wobei $\phi_2$ der Durchmesser der Verstärkungselemente der radial äußeren Arbeitskronenlage ist.

**16.** Reifen nach einem der vorhergehenden Ansprüche, **dadurch gekennzeichnet, dass** der Unterschied zwischen der axialen Breite der axial breitesten Arbeitskronenschicht und der axialen Breite der axial am wenigsten breiten Arbeitskronenschicht zwischen 5 und 30 mm liegt.

**17.** Reifen nach einem der vorhergehenden Ansprüche, **dadurch gekennzeichnet, dass** der Winkel, der mit der Umfangsrichtung von den Verstärkungselementen der Arbeitskronenschichten gebildet wird, kleiner ist als 30° und vorzugsweise kleiner als 25°.

**18.** Reifen nach einem der vorhergehenden Ansprüche, **dadurch gekennzeichnet, dass** die Arbeitskronenschichten Verstärkungselemente aufweisen, die von einer Lage zur anderen gekreuzt sind, die mit der Umfangsrichtung variable Winkel entlang der axialen Richtung einnehmen.

**19.** Reifen nach einem der vorhergehenden Ansprüche, **dadurch gekennzeichnet, dass** die Kronenbewehrung radial außerhalb durch mindestens eine zusätzliche Lage, Schutzlage genannt, aus so genannten elastischen Verstärkungselementen ergänzt ist, die zu der Umfangsrichtung mit einem Winkel zwischen 10° und 45° und mit gleicher Richtung wie der Winkel, der von den nicht dehnbaren Elementen der Arbeitslage, die radial neben ihr liegt, ausgerichtet sind.

**20.** Reifen nach einem der vorhergehenden Ansprüche, **dadurch gekennzeichnet, dass** die Kronenbewehrung eine Triangulationsschicht aufweist, die aus metallischen Verstärkungselementen gebildet ist, die mit der Umfangsrichtung Winkel größer als 40° einnehmen.

**21.** Reifen nach einem der vorhergehenden Ansprüche, **dadurch gekennzeichnet, dass** die Verstärkungselemente der zusätzlichen Schicht metallische Verstärkungselemente sind.

**22.** Reifen nach einem der Ansprüche 1 bis 18, **dadurch gekennzeichnet, dass** die Verstärkungselemente der zusätzlichen Schicht Textilverstärkungselemente sind.

23. Reifen nach einem der vorhergehenden Ansprüche, **dadurch gekennzeichnet, dass** die Kronenbewehrung mindestens eine ununterbrochene Schicht umfänglicher Verstärkungselemente aufweist.

24. Reifen nach Anspruch 23, **dadurch gekennzeichnet, dass** die axiale Breite mindestens einer ununterbrochenen Schicht umfänglicher Verstärkungselemente kleiner ist als die axiale Breite der axial breitesten Arbeitskronenschicht.

25. Reifen nach Anspruch 23 oder 24, **dadurch gekennzeichnet, dass** mindestens eine ununterbrochene Schicht umfänglicher Verstärkungselemente radial zwischen zwei Arbeitskronenschichten angeordnet ist.

26. Reifen nach Anspruch 25, **dadurch gekennzeichnet, dass** die axialen Breiten der Arbeitskronenschichten radial neben der ununterbrochenen Schicht umfänglicher Verstärkungselemente größer sind als die axiale Breite der ununterbrochenen Schicht umfänglicher Verstärkungselemente.

27. Reifen nach einem der Ansprüche 23 bis 26, **dadurch gekennzeichnet, dass** die Verstärkungselemente mindestens einer ununterbrochenen Schicht umfänglicher Verstärkungselemente metallische Verstärkungselemente sind, die ein Sekantenmodul von 0,7 % Dehnung zwischen 10 und 120 GPa und ein maximales Tangentenmodul kleiner als 150 GPa aufweisen.

28. Reifen nach Anspruch 27, **dadurch gekennzeichnet, dass** das Sekantenmodul der Verstärkungselemente von 0,7 % Dehnung kleiner ist als 100 GPa, vorzugsweise größer als 20 GPa und vorzugsweise zwischen 30 und 90 GPa liegt.

29. Reifen nach einem der Ansprüche 27 oder 28,
**dadurch gekennzeichnet, dass** das maximale Tangentenmodul der Verstärkungselemente kleiner ist als 130 GPa und vorzugsweise kleiner als 120 GPa.

30. Reifen nach einem der Ansprüche 23 bis 29, **dadurch gekennzeichnet, dass** die Verstärkungselemente mindestens einer ununterbrochenen Schicht umfänglicher Verstärkungselemente metallische Verstärkungselemente sind, die eine Zugspannungskurve in Abhängigkeit von der relativen Dehnung mit schwachen Gefällen für schwache Dehnungen und einem im Wesentlichen konstanten und starken Gefälle für die größeren Dehnungen aufweisen.

31. Reifen nach einem der Ansprüche 23 bis 26, **dadurch gekennzeichnet, dass** die Verstärkungselemente mindestens einer ununterbrochenen Schicht umfänglicher Verstärkungselemente metallische Verstärkungselemente sind, die derart geschnitten sind, dass sie Abschnitte mit einer Länge bilden, die kleiner ist als der Umfang der kürzesten Lage, aber größer als 0,1 Mal der Umfang, wobei die Schnitte zwischen den Abschnitten axial zueinander versetzt sind, wobei das Zugelastizitätsmodul pro Breiteneinheit der ununterbrochenen Schicht umfänglicher Verstärkungselemente vorzugsweise kleiner ist als das Zugelastizitätsmodul der dehnbarsten Arbeitskronenschicht, das unter den gleichen Bedingungen gemessen wird.

32. Reifen nach einem der Ansprüche 23 bis 26, **dadurch gekennzeichnet, dass** die Verstärkungselemente mindestens einer ununterbrochenen Schicht umfänglicher Verstärkungselemente wellige metallische Verstärkungselemente sind, wobei das Verhältnis a/$\lambda$ der Amplitude der Welligkeit a zu der Wellenlänge $\lambda$ maximal gleich 0,09 ist, wobei das Zugelastizitätsmodul pro Breiteneinheit der ununterbrochenen Schicht umfänglicher Verstärkungselemente vorzugsweise kleiner ist als das Zugelastizitätsmodul der dehnbarsten Arbeitskronenschicht, das unter den gleichen Bedingungen gemessen wird.

**FIG.1**

**FIG.2**

**FIG.3**

$L_{443}$

$L_{444}$

$L_{442}$

41

443  G

444  45

D

d

442

44

441

445

P

42

$L_{445}$

X

X'

$L_{441}$

**FIG.4**

**FIG.5**

**FIG.6**

**EP 1 899 182 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004076204 A
- EP 0582196 A
- FR 1389428
- FR 2222232
- FR 2728510
- WO 9924269 A